# EUROPEAN PATENT APPLICATION

(11) **EP 4 807 301 A1**
(43) Date of publication of application: **16.09.2026**
(21) Application number: 25877941.2
(22) Date of filing: 02.10.2025
(51) Int. Cl.: F26B 13/08, F26B 21/00, F26B 13/10, F26B 3/04, H01M 4/04

(54) **ELECTRODE DRYING DEVICE HAVING NOVEL STRUCTURE**

(30) Priority: 11.10.2024 KR 20240138992; 01.10.2025 KR 20250143621
(71) Applicant: LG Energy Solution, Ltd., Seoul 07335 (KR)
(72) Inventor: CHOI, Yohan, Daejeon 34122 (KR); SHIM, Hyunseok, Daejeon 34122 (KR); CHUNG, Changkwon, Daejeon 34122 (KR)
(74) Representative: Plasseraud IP
(86) International application number: PCT/KR2025/015838
(87) International publication number: WO 2026/079885

(57) **Abstract**

According to an embodiment of the present disclosure, provided is an electrode drying apparatus comprising:
a drying chamber through which the electrode passes,
one or more heat sources installed in a transfer direction of the electrode in the inside of the drying chamber,
a drying chamber inlet part through which the electrode enters into the drying chamber,
a drying chamber outlet part through which the electrode exits from the drying chamber,
a first air supply part and a second air supply part installed at the drying chamber inlet part and the drying chamber outlet part, and
a first exhaust part and a second exhaust part through which the air supplied from the first air supply part and the second air supply part is exhausted.

## Description

### TECHNICAL FIELD

### Cross-Reference to Related Application(s)

This application claims priority to and the benefit of Korean Patent Application No. 10-2024-0138992, filed on October 11, 2024, and Korean Patent Application No. 10-2025-0143621, filed on October 1, 2025, the entire contents of which are incorporated herein by reference.

The present disclosure relates to an electrode drying apparatus having new structure.

### BACKGROUND

In modern society, as portable devices such as a mobile phone, a notebook computer, a camcorder and a digital camera as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

In this case, lithium secondary batteries are manufactured by stacking and/or winding electrodes and separators to prepare an electrode assembly, and then incorporating the assembly into a secondary battery case. The electrode is manufactured by applying an electrode slurry including an electrode active material to one surface or both surfaces of an electrode current collector, followed by drying, and rolling.

Further, during the manufacturing process of the electrode, an R2R drying (R2R Dryer) process is performed, which involves undergoing an electrode drying process once more to remove residual moisture from the electrode slurry after either the roll press process of the electrode sheet or the notching process of forming an electrode tab on an uncoated part where the electrode slurry is not applied.

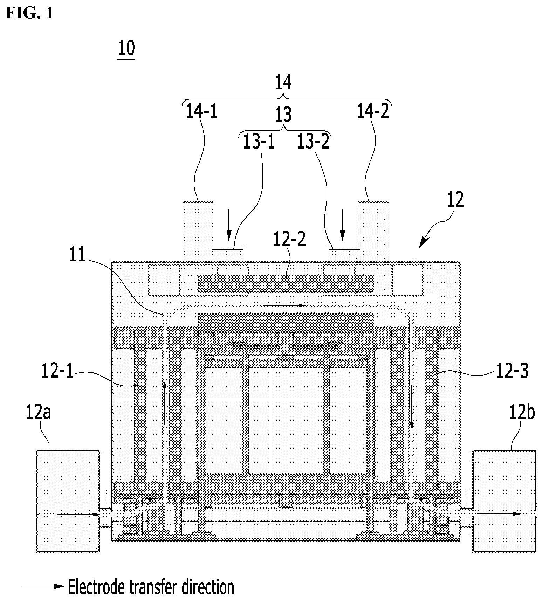

FIG. 1 schematically shows a conventional electrode drying apparatus for the R2R drying process.

Referring to FIG. 1, a conventional electrode drying apparatus 10 includes a drying chamber 12 through which an electrode 11 passes, one or more heat sources 12-1, 12-2, 12-3 installed in a transfer direction of the electrode 11 inside the drying chamber 12, a drying chamber inlet part 12a through which the electrode 11 enters into the drying chamber 12, and a drying chamber outlet part 12b through which the electrode 11 exits from the drying chamber 12.

In this case, in order to prevent the electrode 11 from being overheated or increased in humidity at the time of drying the electrode 11, an air supply part 13 and an exhaust part 14 are included to circulate low-temperature, low-humidity air into the drying chamber 12, wherein the air supply part 13 is located in a state spaced apart in a transfer direction of the electrode 11 at an upper part of the drying chamber 12, i.e., in a Mid zone where the electrode 11 is transferred in parallel, and includes a first air supply part 13-1 and a second air supply part 13-2, which are formed in a direction perpendicular to the transfer direction of the electrode 11 and supply air in the inside of the drying chamber 12. The exhaust part 14, which exhausts the supplied air, includes a first exhaust part 14-1 and a second exhaust part 14-2 which are connected to the Mid zone on a rear surface of the drying chamber 12, and located in a state spaced apart in the transfer direction of the electrode 11.

However, even if an air supply part 13 and an exhaust part 14 are included to perform cooling of the electrode 11, the air supplied to the air supply part 13 is difficult to be directly cooled by a heat source that blocks the electrode, and also circulates in the inside of the drying chamber 12, so that cooling is performed inefficiently. Furthermore, circulation within the drying chamber 12 also flows and exhausts only in the Mid zone, thereby not flowing around the periphery of the electrode.

Therefore, when the electrode transfer is stopped during the R2R drying process, the electrodes are overheated by a high-temperature IR lamp in the drying chamber, which can cause a problem of electrode quality degradation. Therefore, there is a need to develop a technology that can solve these problems

### DETAILED DESCRIPTION OF THE INVENTION

### Technical Problem

It is an object of the present disclosure to an electrode drying apparatus that allows low-temperature, low-humidity air supplied to the electrode drying apparatus during R2R drying process to effectively flow around the periphery of the electrode, thereby preventing electrode from being overheated and increased in humidity.

However, the technical objects to be solved by embodiments of the present disclosure are not limited to the above-described objects, and can be variously expanded within the scope of the technical idea included in the present disclosure.

### Technical Solution

According to an aspect of the present disclosure, provided is an electrode drying apparatus comprising:
a drying chamber through which the electrode passes,
one or more heat sources installed in a transfer direction of the electrode in the inside of the drying chamber,
a drying chamber inlet part through which the electrode enters into the drying chamber,
a drying chamber outlet part through which the electrode exits from the drying chamber,
a first air supply part and a second air supply part installed at the drying chamber inlet part and the drying chamber outlet part, and
a first exhaust part and a second exhaust part through which the air supplied from the first air supply part and the second air supply part is exhausted.

In an embodiment, the electrode drying apparatus may comprise a first transfer roll and a second transfer roll that transfer the electrode from the drying chamber inlet part to the drying chamber outlet part.

In an embodiment, the drying chamber comprises In zone, Mid zone, and Out zone,
the In zone may be a zone that is connected to the drying chamber inlet part, and allows the electrode to transfer from a lower part to an upper part inside the drying chamber,
the Mid zone may be a zone that allows the electrode to transfer laterally at an upper part inside the drying chamber, and
the Out zone may be a zone that is connected to the drying chamber outlet part, and allows the electrode to transfer from an upper part to a lower part inside the drying chamber.

In an embodiment, the heat source may be an IR lamp, and at least ten heat sources may be formed inside the drying chamber.

In an embodiment, the first air supply part and the second air supply part may supply air at a temperature of 15 to 30 degrees Celsius and a relative humidity of 0.01% RH to 0.10% RH, and may supply air at an air volume of 10 m³/min to 100 m³/min.

### BRIEF DESCRIPTION OF THE DRAWINGS

FIG. 1 is a cross-sectional schematic diagram of a conventional electrode drying apparatus.
FIG. 2 is a cross-sectional schematic diagram of an electrode drying apparatus according to an embodiment of the present disclosure.
FIG. 3 is a perspective view of the electrode drying apparatus of FIG. 2.
FIG. 4 is a schematic diagram dividing the zones of the drying chamber according to the transfer of the electrode in the electrode drying apparatus of FIG. 2.
FIG. 5 is a simulation result showing the electrode surface temperature distribution according to Experimental Example 1.
FIG. 6 is a graph showing the electrode surface temperature in In Zone according to Experimental Example 1.
FIG. 7 is a graph showing the electrode surface temperature in Mid Zone according to Experimental Example 1.
FIG. 8 is a graph showing the electrode surface temperature in Out Zone according to Experimental Example 1.
FIG. 9 is a simulation result showing the airflow pattern inside the drying chamber according to Experimental Example 2.
FIG. 10 is a simulation result showing the humidity distribution inside the drying chamber according to Experimental Example 2.

### DETAILED DESCRIPTION OF THE EMBODIMENTS

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings

Further, throughout the specification, when a portion is referred to as "including" a certain component, it means that the portion can further include other components, without excluding the other components, unless otherwise stated.

Further, throughout the specification, the "upper part" and "lower part" are defined with reference to the state in which the electrode drying apparatus is mounted.

Below, embodiments of the present disclosure will be described with reference to the accompanying drawings.

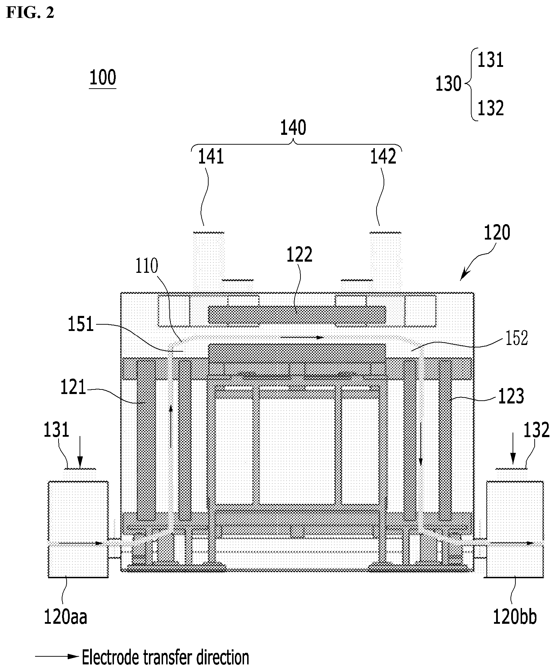

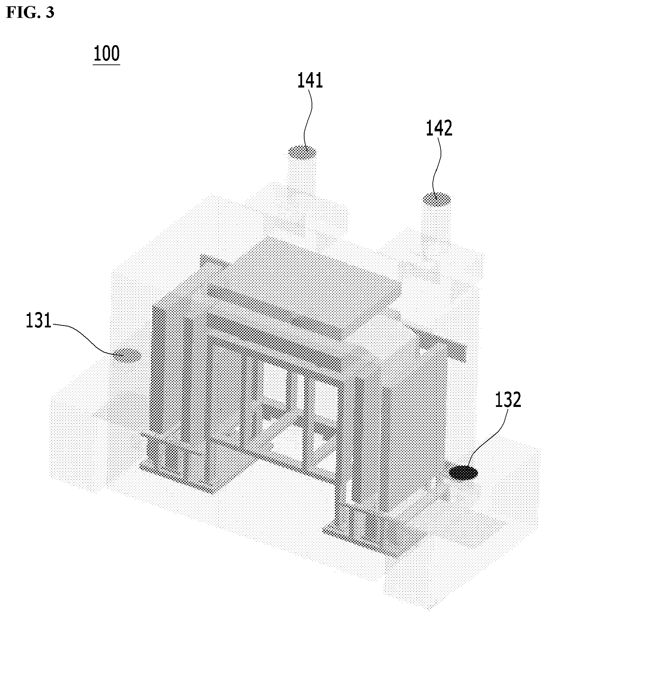

FIG. 2 shows a cross-sectional schematic diagram of an electrode drying apparatus according to an embodiment of the present disclosure, and FIG. 3 shows a perspective view of the electrode drying apparatus of FIG. 2.

Referring to FIGS. 2 and 3 together, an electrode drying apparatus 100 according to one embodiment of the present disclosure comprises a drying chamber 120 through which the electrode 110 passes, one or more heat sources 121, 122, 123 installed in a transfer direction of the electrode 110 in the inside of the drying chamber120, a drying chamber inlet part 120aa through which the electrode 110 enters into the drying chamber 120, and a drying chamber outlet part 120bb through which the electrode 110 exits from the drying chamber 120.

In addition, in order to prevent the electrode 110 from being overheated during drying, an air supply part 130 that supplies low-temperature, low-humidity air into the drying chamber 120 and an exhaust part 140 that discharges the supplied air are connected and installed to the drying chamber 120.

The electrode drying apparatus may further comprise a first transfer roll 151 and a second transfer roll 152 that transfer the electrode 110 from the drying chamber inlet part 120aa to the drying chamber outlet part 120bb. Here, the number of transfer rolls is shown as two, but the number is not limited and may be two or more, four or more, or specifically six to ten. Such transfer rolls may be formed in a direction in which the transfer direction of the electrode changes.

That is, after the basic drying for forming an electrode mixture layer is completed, the electrode 110 may undergo an additional drying process again to remove any residual moisture remaining in the electrode mixture layer.

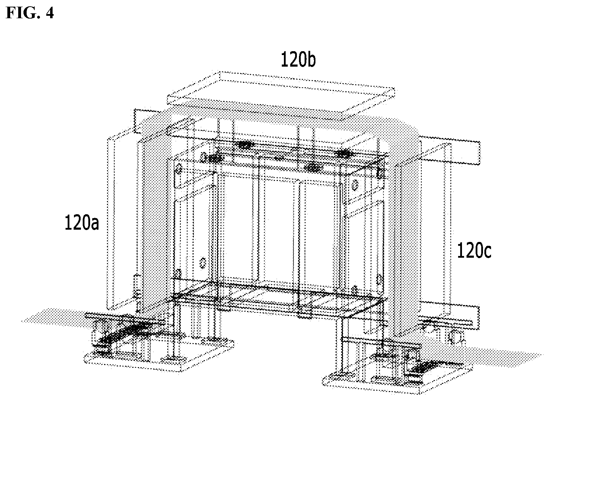

Meanwhile, in order to examine the transport pattern of the electrode 110 inside the drying chamber 120, FIG. 4 shows a schematic diagram dividing the zones of the drying chamber according to the transfer of the electrode 110 in the electrode drying apparatus 100 of FIG. 2.

Specifically, the drying chamber 120 is divided into three zones on the basis of the transfer direction of the electrode 110, specifically, including an In zone 120a, a Mid zone 120b, and an Out zone 120c.

Here, the In zone 120a is a zone that is connected to the drying chamber inlet part 120aa, and allows the electrode 110 to transfer from a lower part to an upper part inside the drying chamber 120, the Mid zone 120b is a zone that allows the electrode 110 to transfer laterally from one side surface to the other side surface at an upper part inside the drying chamber 120, and the Out zone 120c is a zone that is connected to the drying chamber outlet part 120bb, and allows the electrode 110 to transfer from an upper part to a lower part inside the drying chamber 120.

Therefore, the electrode 110 undergoes a process of being transferred from In zone 120a to Mid zone 120b and then from Mid zone 120b to Out zone 120c.

Meanwhile, the basic structure of the above-described electrode drying apparatus 100 according to the present disclosure is similar to that of a conventional electrode drying apparatus. However, the apparatus according to the present disclosure has a clear difference in the position where the air supply part 130 is formed.

Specifically, in the electrode drying apparatus 100 of the present disclosure, the air supply part 130 does not have a structure that is formed so as to connect to the interior of the drying chamber 120, but has a structure in which the first air supply part 131 and the second air supply part 132 are formed at the drying chamber inlet part 120aa, which is a connection part where the electrode 110 enters into the drying chamber 120, and at the drying chamber outlet part 120bb, which is a connection part where the electrode 110 exits from the drying chamber 120.

According to the results of a thermal flow simulation conducted by the present inventors, when the air supply part is formed at an upper part of the drying chamber, i.e., in the Mid zone, as in a conventional electrode drying apparatus, there is a problem that the air supplied into the drying chamber does not flow around the periphery of the electrode, but is immediately exhausted to the exhaust part. As a result, the electrode cannot be sufficiently cooled, and the electrode overheating issue still exists, which also leads to a degradation in electrode quality.

However, as in the present disclosure, if the air supply part 130 is formed outside the drying chamber 120, more specifically, lower than the exhaust part 140, taking into account the flow of the electrode 110 transferring from the lower part to the upper part and from the upper part to the lower part in the inside of the drying chamber 120, the flow of supplied air easily circulates around the periphery of the electrode 110, thereby enabling effective cooling of the electrode.

Therefore, in the air supply part 130 according to the present disclosure, a first air supply part 131 may be formed at the drying chamber inlet part 120aa, which is a portion where the electrode 110 enters into the drying chamber 120, and a second air supply part 132 may be formed at the drying chamber outlet part 120bb, which is a portion where the electrode 110 exits from the drying chamber 120.

Thereby, it is possible to supply low-temperature, low-humidity air in both side directions centered around the drying chamber 120.

Further, the exhaust part 140 may be located at the upper part of the drying chamber 120, i.e., in the Mid zone 120b, in the same manner as a conventional electrode drying apparatus. Specifically, the first exhaust part 141 and the second exhaust part 142 may be formed in a state spaced apart from each other at the upper part of the drying chamber 120, i.e., in the Mid zone 120b, on the basis of the transfer direction of the electrode 110.

Therefore, low-temperature, low-humidity air supplied from the air supply part 130 formed on both sides of the lower part of the drying chamber 120 exits through the exhaust part 140 formed on the upper part of the drying chamber 120, so that it is exhausted while flowing around the periphery of the electrode 110, and cannot help but flow throughout the entire interior of the drying chamber 120, thereby making it easier to cool the electrode 110.

In this case, the air supplied to the first air supply part 131 and the second air supply part 132 may be low-temperature, low-humidity air, having temperature of 15 to 30 degrees Celsius and relative humidity of 0.01%RH to 10% RH.

Specifically, it may be the air having temperature of 15 to 20 degrees Celsius and relative humidity of 0.02%RH to 0.5% RH, or more specifically, temperature of 15 to 20 degrees Celsius and relative humidity of 0.02%RH to 0.1% RH.

In order to supplying air having temperatures that are too low outside the above range, an apparatus for rapidly cooling the air is required, which results in a reduction in efficiency. If air having too high temperature is supplied, the effect of cooling the electrode cannot be achieved.

Further, if the relative humidity is high outside the above range, it can interfere with drying of the electrode, which is not preferable.

Furthermore, the air volume of the supplied air may be, for example, 10 m³/min to 100 m³/min, particularly 15 m³/min to 80 m³/min, more particularly 18 m³/min to 60 m³/min, and most particularly 20 m³/min to 40 m³/min.

If the air volume is low outside the above range, insufficient electrode cooling may not be achieved, and if the air volume is too high, it leads to a problem of cost increase, which is not preferable.

Meanwhile, the heat sources 121, 122, 123 formed inside the drying chamber 120 for drying the electrode 110 are not limited as long as they are capable of drying the electrode, and may include hot air, IR lamps, and the like. Specifically, the heat source may be an IR lamp so as not to collide with the low-temperature, low-humidity air for cooling the electrode 110. In this case, the IR lamp may be formed on a reflector or the like.

Furthermore, the number of the heat sources 121, 122, 123 formed inside the drying chamber 120 may be 10 or more, particularly 20 or more, and more particularly 30 or more.

In this case, the interval between two or more heat sources 121, 122 is not limited, but they may be formed at equal intervals to ensure uniform electrode drying.

Hereinafter, embodiments of the present invention will be described with referent to examples to demonstrate the effects of the present disclosure.

### <Comparative Example 1>

In the electrode drying apparatus shown in FIG. 1, an electrode drying apparatus to which an air supply part was not applied was used.

### <Comparative Example 2>

An electrode drying apparatus as shown in FIG. 1 was used.

### <Example 1>

An electrode drying apparatus as shown in FIG. 2 was used.

### <Experimental Example 1>

A thermal flow simulation evaluation was performed using the electrode drying apparatuses of Comparative Examples 1 and 2 and Example 1, under the conditions shown in Table 1 below.

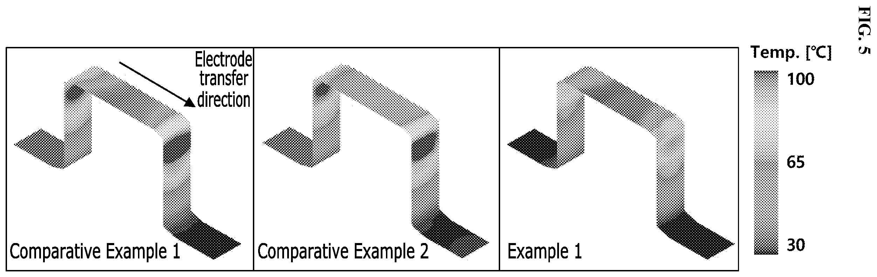

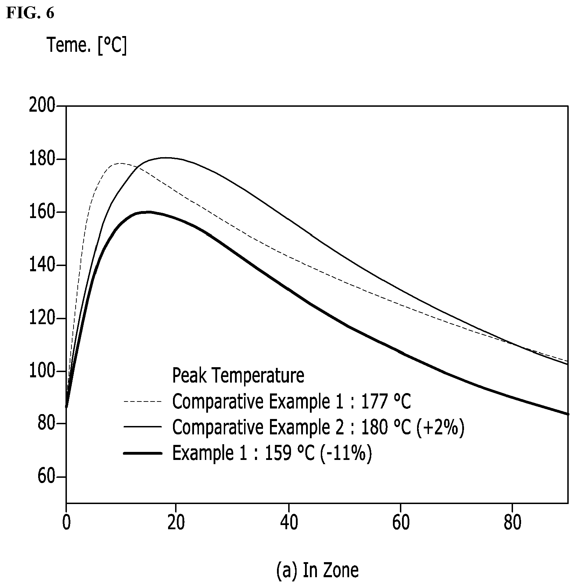

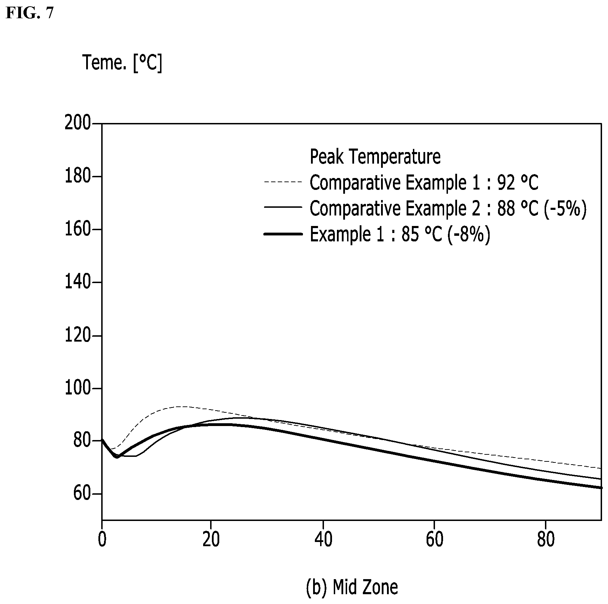

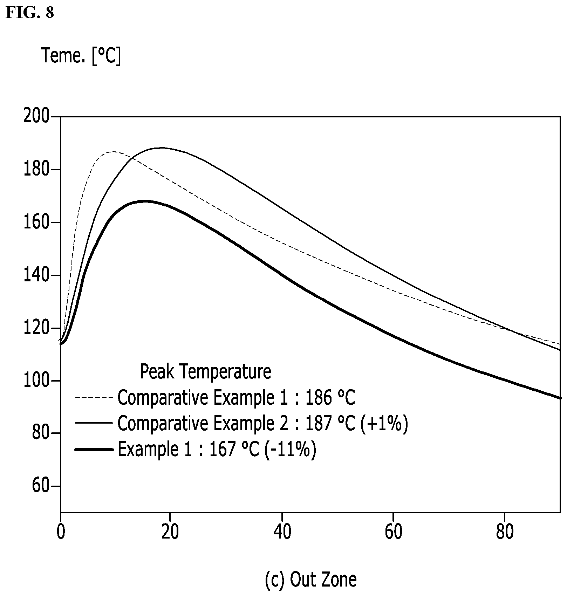

The thermal flow simulation was performed using Siemens Star-ccm* v18.02 software. The temperature distributions for the In zone, Mid zone, and Out zone of the electrodes passing through each electrode drying apparatus were compared, and the maximum temperatures were compared through temperature graphs, and are shown in FIGS. 5 to 8.

The apparatus was operated under the conditions of ambient temperature of 17°C and 90 IR lamps (30 for each zone), and as the electrodes, those manufactured in the same manner and having the thermal properties of 500 J/kgK were used.

**[Table 1]**

| | Temperature (°C) | | | Humidity(%RH) | | | Air volume (m³/min) | |
|---|---|---|---|---|---|---|---|---|
| | Air supply (L/R) | DE | DO | Air supply (L/R) | DE | DO | Air supply (L/R) | Exhaust (L/R) |
| Comparative Example 1 | - | 23 | 20 | - | 2 | 2 | - | 39/46 |
| Comparative Example 2 | 17/17 | 23 | 20 | 0.03/0.03 | 2 | 2 | 20/20 | 39/46 |
| Example 1 | 17/17 | 23 | 20 | 0.03/0.03 | 2 | 2 | 20/20 | 39/46 |

| | | | | | | | | |
|---|---|---|---|---|---|---|---|---|
| *L: left, R: right, DE: drying chamber inlet part, DO: drying chamber outlet part | | | | | | | | |

Referring to FIGS. 5 to 8, it can be confirmed that in all electrode zones, i.e., the In zone, Mid zone, and Out zone, the electrode passing through the apparatus according to Example 1 had the lowest temperature distribution and the lowest peak temperature.

Also, as shown in FIG. 5, when the air supply part is formed in the same manner as Comparative Example 2 of the conventional electrode drying apparatus, cooling by the air supply part increases while cooling by outside air decreases, however, it can be confirmed that the forming position of the air supply part is not effective, and rather the temperature in the Mid zone is higher than in Comparative Example 1 where no air supply part was formed.

### <Experimental Example 2>

A simulation evaluation was conducted on the airflow patterns and humidity distribution of the electrode drying apparatuses of Comparative Examples 1 and 2 and Example 1.

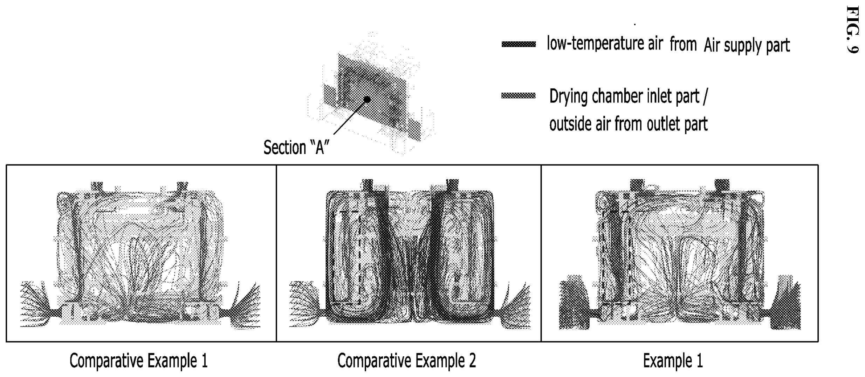

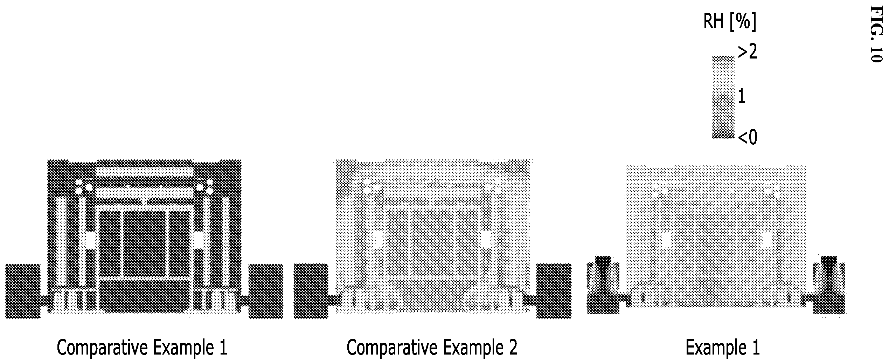

The thermal flow simulations were performed using Siemens Star-ccm* v18.02 software, and measurements were performed based on Section "A" of the electrode drying apparatus, as shown in FIGS. 9 and 10. FIG. 9 illustrates the airflow pattern in the drying chamber, and FIG. 10 illustrates the humidity distribution in the drying chamber.

Referring to FIG. 9, it can be confirmed that in the electrode drying apparatus of Comparative Example 2, which performs air supply, substantially no supply air flows through the heating plate area where the electrodes are transferred. On the contrary, it can be seen that in the electrode drying apparatus of Example 1 according to the present disclosure, supply air flows through the electrode transfer heating plate section.

On the other hand, referring to FIG. 10, it can be confirmed in Comparative Example 1, which does not have an air supply part, the humidity remains high as a whole, and in Comparative Example 2, which is a conventional drying apparatus, the overall humidity inside the drying chamber is low; however, but the humidity does not decrease between the heating plates through which the electrodes are transferred; whereas, in the electrode drying apparatus of Example 1 according to the present disclosure, the overall humidity inside the drying chamber is slightly lower, and the humidity between the heating plates through which the electrodes are transferred is substantially lower.

Therefore, in the case of using an electrode drying apparatus with a structure according to the present disclosure, it is possible to prevent electrode from being overheated while maintaining low humidity during electrode drying, which is advantageous for drying.

Based on the above disclosure, various applications and modifications can be carried out by those of ordinary skill in the art without deviating from the spirit and scope of the present disclosure.

### [Description of Reference Numerals]

10, 100: electrode drying apparatus
11, 110: electrode
12, 120: drying chamber
13, 130: air supply part
14, 140: exhaust part
151, 152: transfer roll.

### [Industrial Applicability]

According to the present disclosure, the air supply part that supplies cooled low-temperature, low-humidity air into the drying chamber is installed outside the drying chamber rather than the inside, and the low-temperature, low-humidity air is supplied from outside, so that the supplied low-temperature, low-humidity air flows effectively around the periphery of the electrode inside the drying chamber, whereby not only it enables superior drying of the electrode, but also it can more effectively prevent electrode overheating, thereby enhancing the electrode quality as well.

The effects of the present disclosure are not limited to the effects mentioned above, and additional other effects not mentioned above will be clearly understood from the description of the appended claims by those skilled in the art.

## Claims

1. An electrode drying apparatus comprising:
a drying chamber through which the electrode passes,
one or more heat sources installed in a transfer direction of the electrode in the inside of the drying chamber,
a drying chamber inlet part through which the electrode enters into the drying chamber,
a drying chamber outlet part through which the electrode exits from the drying chamber,
a first air supply part and a second air supply part installed at the drying chamber inlet part and the drying chamber outlet part, and
a first exhaust part and a second exhaust part through which the air supplied from the first air supply part and the second air supply part is exhausted.

2. The electrode drying apparatus according to claim 1,
comprising a first transfer roll and a second transfer roll that transfer the electrode from the drying chamber inlet part to the drying chamber outlet part.

3. The electrode drying apparatus according to claim 1,
wherein the drying chamber comprises In zone, Mid zone, and Out zone,
the In zone is a zone that is connected to the drying chamber inlet part, and allows the electrode to transfer from a lower part to an upper part inside the drying chamber,
the Mid zone is a zone that allows the electrode to transfer laterally at an upper part inside the drying chamber, and
the Out zone is a zone that is connected to the drying chamber outlet part, and allows the electrode to transfer from an upper part to a lower part inside the drying chamber.

4. The electrode drying apparatus according to claim 1,
wherein the heat source is an IR lamp.

5. The electrode drying apparatus according to claim 1,
wherein at least ten heat sources are formed inside the drying chamber.

6. The electrode drying apparatus according to claim 1,
wherein the first air supply part and the second air supply part supply air at a temperature of 15 to 20 degrees Celsius and a relative humidity of 0.01% RH to 0.05% RH.

7. The electrode drying apparatus according to claim 1,
wherein the first air supply part and the second air supply part supply air at an air volume of 15 m³/min to 35 m³/min.

8. The electrode drying apparatus according to claim 3,
wherein the first exhaust part and the second exhaust part is connected to the Mid zone.
